# DEMANDE DE BREVET EUROPEEN

(11) **EP 0 806 752 A1**
(43) Date de publication de la demande: **12.11.1997**
(21) Numéro de dépôt: 97401015.9
(22) Date de dépôt: 06.05.1997
(51) Int. Cl.: G09F 7/16, B60R 13/10, B41M 1/30, B44C 1/16

(54) **Plaque comportant des signes d'identification**

(30) Priorité: 07.05.1996 FR 9605649
(71) Demandeur: Charbonnier, Denis, 92300 Levallois-Perret (FR)
(72) Inventeur: Bridoux, Eric, 62580 Vimy (FR); Charbonnier, Denis, 92300 Levallois-Perret (FR)

(57) **Abrégé**

La présente invention concerne des plaques identificatoires.

La plaque identificatoire selon l'invention, qui comporte des signes d'identification directement imprimés, colorés, au verso d'une feuille transparente (1) sur lequel est rapporté un film opaque (3) de couleur différente, se caractérise en ce que la dite feuille transparente (1) est sensiblement plane et d'une rigidité telle qu'il est impossible de l'enrouler sur un cylindre d'un diamètre de 25 mm par déformation élastique et que les dits signes d'identification sont directement obtenus par transfert à partir d'un ruban comportant l'élément coloré (5) producteur des dits signes.

## Description

La présente invention concerne une plaque identificatoire comportant sur son verso les éléments caractéristiques de l'identification concernée.

Une première technique concerne des plaques identificatoires composées par une feuille souple constituant le fond, une plaque supérieure transparente et des signes de transfert intercalés entre ces deux éléments. Les dits signes ayant été pré-fabriqués. Cette technique nécessite un stock important de signes ainsi qu'une main d'oeuvre qualifiée.

Selon une autre technique, les signes sont formés par l'emboutissage d'une feuille métallique puis colorés par transfert. Outre les inconvénients précédents, cette technique impose l'utilisation de matériel lourd.

D'autres techniques, telles que l'impression sérigraphique ou le transfert de film adhésif découpé par ordinateur, nécessitent un temps de préparation important ainsi que des frais de démarrage pénalisant la réalisation de plaques à l'unité.

Les techniques employées sont complexes et onéreuses et imposent, soit des stocks importants d'éléments pré-fabriqués, soit un certain temps de préparation lorsque les plaques indentificatoires sont fabriquées à l'unité. De plus, la plupart de ces techniques nécessitent beaucoup de précaution lors de la mise en oeuvre.

Le problème posé est donc d'imprimer facilement et à faible coût des plaques identificatoires à l'unité, même si ces plaques comportent un grand nombre de signes différents.

La plaque identificatoire selon l'invention, qui comporte des signes d'identification directement imprimés, colorés, au verso d'une feuille transparente sur lequel est rapporté un film opaque de couleur différente, se caractérise en ce que la dite feuille transparente est sensiblement plane et d'une rigidité telle qu'il est impossible de l'enrouler sur un cylindre d'un diamètre de 25 mm par déformation élastique et que les dits signes d'identification sont directement obtenus par transfert à partir d'un ruban comportant l'élément coloré producteur des dits signes.

Le transfert de l'élément coloré sur la feuille transparente se fait grâce à l'action de la tête d'impression selon toute technique d'impression par transfert.

Les signes sont fabriqués et transférés simultanément sur la plaque transparente.

La tête d'impression est pilotée éléctroniquement par une unité informatique qui possède en mémoire tous les graphismes des signes à utiliser.

Le déplacement de la feuille transparente par rapport à la tête d'impression, ou bien de la tête d'impression par rapport à la feuille transparente, permet à la tête d'impression de balayer la surface à imprimer de la feuille.

Une unité informatique, et/ou électromécanique, pilote les déplacements de la tête et/ou de la plaque et/ou l'activation de la tête d'impression.

Grâce à la technique de l'invention, on peut réaliser des plaques identificatoires, très simplement et à faible coût, en deux phases :
a - Impression sur la feuille transparente d'une inscription constituée de signes grâce à une imprimante à transfert aussi simple d'utilisation qu'une imprimante de bureau,
b - Le film opaque est rapporté au verso de la plaque transparente. Selon des modes particuliers de fabrication :
   - la feuille transparente peut avoir une résistance à des agents de corrosion de façon à ce que la plaque puisse être utilisée dans des ambiances agressives.
   - l'élément coloré peut être de l'encre.
   - le film opaque peut être rapporté par adhésivage sur la feuille transparente préalablement imprimée.
   - Le film opaque peut avoir des propriétés spécifiques lui permettant de se différencier de son environnement. Ces propriétés peuvent être photométriques et/ou colorimétriques. Ces mêmes propriétés peuvent être naturelles.
   - L'élément coloré imprimé par transfert peut avoir des propriétés spécifiques lui permettant de se différencier de son environnement. Ces propriétés peuvent être photométriques et/ou colorimétriques. Ces mêmes propriétés peuvent être d'origine naturelle et/ou activée par une excitation particulière.
   - La feuille transparente peut être en matière plastique, l'élément coloré peut être une encre opaque et le film opaque peut être constitué d'un film rétro-réfléchissant auto-adhésif conforme aux contraintes de l'immatrication automobile.
   - Une mémoire informatique liée au dispositif peut enregistrer des opérations réalisées par l'imprimante. Ces opérations peuvent être l'historique des signes imprimés. La restitution de ces informations, sous conditions particulières, apporte une sécurité supplémentaire à l'utilisation de la plaque identificatoire terminée.

Pour des raisons évidentes de simplicité, la mise en oeuvre du dispositif selon l'invention peut :
- associer l'imprimante, l'unité informatique et son clavier dans un même objet.
- personnaliser l'impression des plaques en fonction d'informations stockées dans une mémoire informatique.

Cette technique ne nécessite ni temps de séchage, ni main d'oeuvre qualifiée, ni gros matériel, ni stock de signes pré-fabriqués.

Elle est également silencieuse et non polluante.

L'élément coloré est protégé du milieu extérieur par la feuille transparente sur l'une de ses faces, et par le film opaque, sur son autre face.

Les dessins annexés illustrent l'invention :

La figure 1 représente en coupe, la feuille transparente (1) imprimée par transfert d'un élément coloré (5) et rapportée sur un film opaque (3).

La figure 2 représente en coupe la feuille transparente (1) lors de son impression par transfert d'un élément coloré (5) par l'action de la tête d'impression (6) sur le ruban (4) contenant l'élément coloré (5), l'action de ces opérations étant pilotée par une unité informatique (7).

Le transfert et la fabrication des signes (2) étant réalisés simultanément.

Les signes sont réalisés à partir de la matière colorée (5) pour composer des signes graphiques reconnaissables.

Le ruban (4) contenant principalement un élément coloré (5) et un film support (11) est déroulé devant la tête d'impression (6).

Ce ruban (4) contenant l'élément coloré (5) est stocké, puis ré-enroulé après utilisation, dans deux bobines (10).

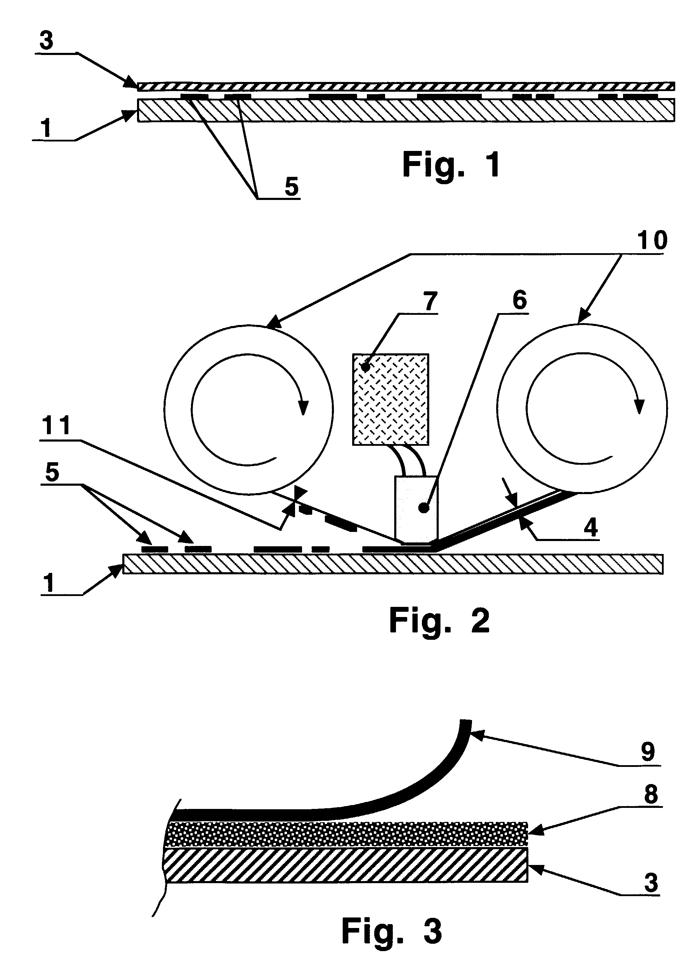

La figure 3 représente en coupe, le film opaque (3) recouvert sur une de ses faces d'un adhésif (8) lui-même protégé d'un film protecteur amovible (9).

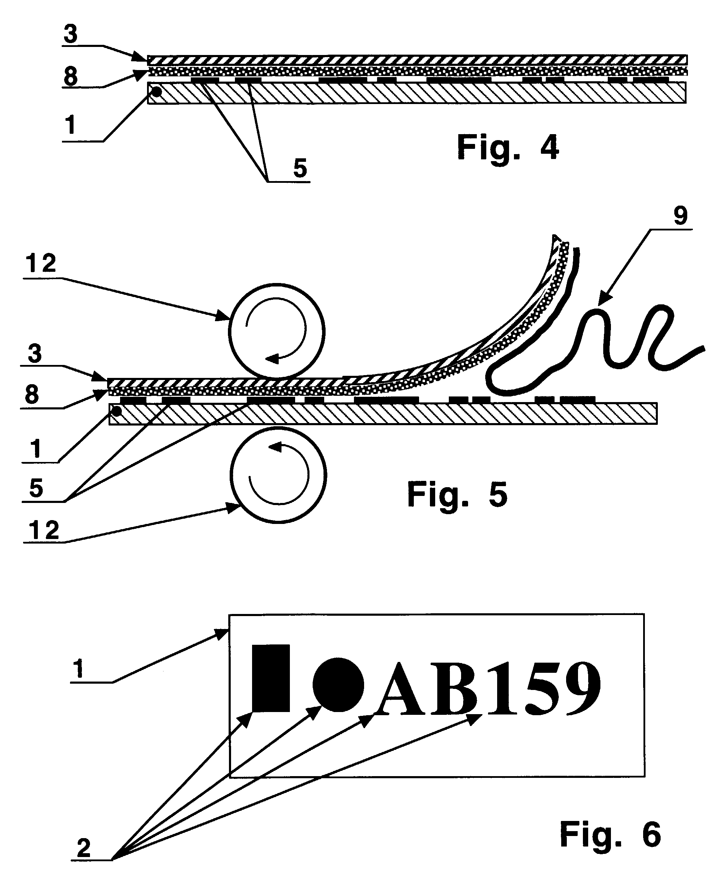

La figure 4 représente en coupe, la feuille transparente (1) imprimée par transfert d'un élément coloré (5) puis sur laquelle a été rapporté un film opaque (3) grâce à l'adhésif (8).

La figure 5 représente en coupe, la feuille transparente (1), préalablement imprimée par transfert d'un élément coloré (5), sur laquelle est rapporté, par calandrage entre deux rouleaux tournants (12), un film opaque (3) grâce à l'adhésif (8).

Le film protecteur amovible (9) est enlevé avant le calandrage.

La figure 6 représente, vue de face, le recto de la feuille transparente (1) imprimée à son verso des signes (2).

Les plaques selon l'invention sont particulièrement destinées à l'immatriculation automobile, au marquage des rues, ou numérotation d'immeubles etc ...

## Revendications

1. Plaque identificatoire comportant des signes (2) d'identification directement imprimés, colorés, au verso d'une feuille transparente (1) sur lequel est rapporté un film opaque (3) de couleur différente, caractérisée en ce que la dite feuille transparente (1) est sensiblement plane et d'une rigidité telle qu'il est impossible de l'enrouler sur un cylindre d'un diamètre de 25 mm par déformation élastique et que les dits signes (2) d'identification sont directement obtenus par transfert à partir d'un ruban (4) comportant l'élément coloré (5) producteur des dits signes (2).

2. Plaque selon l'une des revendications précédentes caractérisée en ce que la feuille transparente (1) est résistante aux agents de corrosion présents en milieu urbain.

3. Plaque selon l'une des revendications précédentes caractérisée en ce que l'élément coloré (5) est de l'encre.

4. Plaque selon l'une des revendications précédentes caractérisée en ce que le film opaque (3) est rapporté grâce à un adhésif (8) sur la feuille transparente (1) préalablement imprimée.

5. Plaque selon l'une des revendications précédentes caractérisée en ce que le film opaque (3) comporte des propriétés photométriques lui permettant de se différencier de son environnement.

6. Plaque selon l'une des revendications précédentes caractérisée en ce que le film opaque (3) comporte des propriétés colorimétriques lui permettant de se différencier de son environnement.

7. Plaque selon l'une des revendications précédentes caractérisée en ce que le film opaque (3) comporte des propriétés d'origines naturelles lui permettant de se différencier de son environnement.

8. Plaque selon l'une des revendications précédentes caractérisée en ce que l'élément coloré (5) comporte des propriétés photométriques lui permettant de se différencier de son environnement.

9. Plaque selon l'une des revendications précédentes caractérisée en ce que l'élément coloré (5) comporte des propriétés colorimétriques lui permettant de se différencier de son environnement.

10. Plaque selon l'une des revendications précédentes caractérisée en ce que l'élément coloré (5) comporte des propriétés d'origines naturelles lui permettant de se différencier de son environnement.

11. Plaque selon l'une des revendications précédentes caractérisée en ce que l'élément coloré (5) comporte des propriétés qui peuvent être activées par une excitation particulière lui permettant de se différencier de son environnement.

12. Plaque selon l'une des revendications précédentes caractérisée en ce qu'une mémoire informatique enregistre des opérations réalisées par l'unité informatique (7) lors de l'impression. Ces opérations peuvent être la liste des signes (2) imprimés sur la feuille transparente (1). La restitution de ces informations est ensuite possible sous conditions particulières.

13. Plaque selon l'une des revendications précédentes caractérisée en ce que la feuille transparente (1) est en matière plastique, l'élément coloré (5) est une encre opaque et le film opaque (3) est constitué d'un film rétro-réfléchissant auto-adhésif. Ces éléments étant adaptés aux exigences techniques liées à la fabrication des plaques d'immatriculation automobile.
